# FASCICULE DE BREVET EUROPEEN

(11) **EP 0 463 971 B1**
(45) Date de publication et mention de la délivrance du brevet: **11.02.1998**
(21) Numéro de dépôt: 91401745.4
(22) Date de dépôt: 27.06.1991
(51) Int. Cl.: C03B 23/03, C03B 27/044

(54) **Procédé et dispositif d'obtention de feuilles de verre bombées et trempées**
Verfahren und Vorrichtung zum Biegen und Härten von Glasscheiben
Method and apparatus for bending and tempering sheets of glass

(30) Priorité: 29.06.1990 DE 4020708
(43) Date de publication de la demande: 02.01.1992
(73) Titulaire: SAINT-GOBAIN VITRAGE, 92400 Courbevoie (FR); VEGLA Vereinigte Glaswerke GmbH, 52066 Aachen (DE)
(72) Inventeur: Vanaschen, Luc, B-4700 Eupen (BE); Kuster, Hans-Werner, W-5100 Aachen (DE); Havenith, Hubert, W-5102 Würselen (DE); Korsten, Wilfried, W-5138 Heinsberg (DE)
(74) Mandataire: Menes, Catherine

(56) Documents cités:
- EP-A- 0 324 690
- EP-A- 0 395 467
- GB-A- 641 777
- GB-A- 2 162 170
- GB-A- 2 166 133
- US-A- 4 784 681
- US-A- 4 883 526

## Description

La présente invention concerne un procédé d'obtention de feuilles de verre bombées et trempées par pressage en position horizontale. Plus précisément, l'invention concerne une variante du procédé de bombage-trempe selon lequel les feuilles sont échauffées à la température de bombage dans un four horizontal puis sont bombées à la forme souhaitée par pressage entre une forme supérieure pleine et une forme inférieure annulaire qui sert également de support à la feuille bombée dans le poste de trempe où les feuilles bombées sont refroidies par soufflage d'air froid. L'invention a également pour objet un dispositif de bombage-trempe permettant la mise en oeuvre de ce dispositif.

Le procédé de bombage brièvement évoqué ci-dessus est connu, par exemple, des brevets européens EP-B-30 340 et EP-B-62 814. Dans différentes variantes de réalisation, il a été proposé d'utiliser la forme annulaire - encore appelée anneau de bombage - non seulement comme forme de bombage mais aussi comme cadre de support et de trempe pour transporter la feuille de verre bombée du poste de bombage au poste de trempe. Pour permettre une trempe correcte des bords supportés par l'anneau de bombage, celle-ci doit être conçue de manière à laisser s'écouler le gaz de refroidissement y compris le long des surfaces de contact. Dans ce but, il est connu des formes annulaires dont la surface portante est munie de rainures ou est entourée d'un filet métallique ou encore d'un tissu ou tricot en fibres résistant à la chaleur, la structure du tissu ou tricot reconstituant des canaux d'évacuation pour l'air de trempe. Mais ces structures particulières engendrent une surface de contact avec la feuille de verre discontinue qui lors du pressage laisse une empreinte sur la surface du verre qui conduit à un léger marquage et/ou des déformations optiques de la bande périphérique de la feuille de verre.

Pour remédier à cet inconvenient, il est connu d'opérer avec deux formes annulaires, la première ayant une surface continue et étant utilisée uniquement lors du pressage et la seconde munie d'une surface discontinue servant au soutien de la feuille de verre pendant la trempe thermique. Les demandes de brevet EP-A-183 418 et EP-A-237 231 donnent des exemples de réalisation basés sur ce principe. Dans ces procédés, la feuille de verre doit être prise en charge par le cadre adapté à la trempe après avoir été bombée ; dans ce but, la forme supérieure de bombage est du type forme aspirante et la feuille de verre est maintenue à son contact par aspiration pendant l'évacuation de l'anneau de bombage et la mise en place du cadre de trempe. L'ensemble de ces opérations ralentit le processus de traitement d'un vitrage et nécessite une installation relativement complexe.

Dans la demande de brevet japonais JP-A-57-145 041, il est présenté un ensemble formé de deux cadres concentriques mobiles l'un par rapport à l'autre, la feuille de verre est tour à tour en contact avec l'un ou l'autre de ces cadres et plus précisément est en contact avec le cadre intérieur, dont la surface est continue, lors de la phase de formage et de son transfert du poste de bombage au poste de trempe. Ce dispositif permet de remédier à quelques uns des inconvénients énumérés plus haut mais nécessite encore deux cadres dont les formes géométriques doivent de plus parfaitement concorder, ce qui est en pratique difficilement réalisable.

Dans la demande de brevet européen EP-A1-0 324 690, il a été proposé un procédé de bombage-trempe de feuilles de verre consistant notamment à utiliser le cadre inférieur de bombage pour amener la feuille de verre bombée au poste de trempe. Dans la station de trempe, après un laps de temps suffisant pour provoquer un raidissement de la feuille de verre, la feuille de verre est soulevée au dessus du cadre par des moyens tels que des plots de levage ou coussins d'air et est prise en charge à sa périphérie par des moyens de préhension discontinus, solidaires du dispositif de trempe supérieur.

L'invention a pour but un développement du procédé mentionné permettant, moyennant des frais d'équipement extrêmement faibles, de bomber des vitrages avec une qualité optique satisfaisante, c'est-à-dire sans déformations indésirables dans la zone périphérique et de les tremper afin d'obtenir en cas de bris du vitrage une fragmentation conforme aux normes de sécurité les plus sévères en matière automobile.

Ce but est atteint selon l'invention par un procédé de bombage-trempe selon la revendication 1 et par un dispositif de bombage selon la revendication 2. L'invention part en premier lieu de la considération selon laquelle un vitrage ne doit pas nécessairement être soutenu sur toute sa périphérie pendant la trempe, à condition de faire en sorte initialement, par un bref refroidissement, que les surfaces de ce vitrage soient solidifiées au point que le vitrage acquière, dans son ensemble, une rigidité et une résistance à la déformation suffisantes.

Il s'est avéré qu'une trempe satisfaisante de la zone marginale en contact avec la contreforme annulaire pendant la première phase de refroidissement peut encore être atteinte pendant que s'achève l'opération de soufflage de refroidissement alors que la première phase du refroidissement au cours de laquelle le vitrage acquiert sa résistance à la déformation, cette zone marginale n'est pas refroidie sur sa face inférieure ou ne l'est tout du moins que très faiblement. L'instant où le vitrage est soulevé par les organes de support à action locale au-dessus du moule annulaire - et ainsi où la surface inférieure de la zone marginale du vitrage est exposée à l'air froid soufflé - doit être déterminé simplement par des essais propres à chaque cas. Il dépend de divers facteurs, en particulier de l'épaisseur des vitrages, de la vitesse de refroidissement et du bombage. Etant donné que ces paramètres restent constants pour un type de vitrage donné fabriqué en série, l'instant optimum peut être déterminé empiriquement puis maintenu constant pendant la fabrication de la série.

Un autre avantage de ce procédé est que la forme annulaire peut être conçue exclusivement en considération des paramètres de bombage. Cela implique, en particulier, qu'elle peut être pourvue d'une garniture élastiquement flexible faite d'une matière fibreuse résistant aux températures élevées et/ou d'un revêtement d'oxyde ou de céramique destiné par exemple à empêcher tout phénomène d'accrochage ou d'adhérence avec le verre chaud.

Etant donné que les organes de support servant pendant la trempe ne sont utilisés qu'après que le vitrage ait acquis sa résistance à la déformation, et qu'ils n'exercent qu'une action très localisée, limitée à une surface de contact relativement petite - il peut s'agir par exemple de doigts - aucune exigence particulière n'est imposée quant à la forme et à la précision de travail des organes de support. Leur construction peut être simple et robuste, ce qui accroît la fiabilité du procédé et du dispositif.

Les organes de support peuvent être disposés dans le poste de soufflage. Dans ce cas, le dispositif d'actionnement de ces organes est monté fixe. Au terme de l'opération de soufflage ou lorsque la trempe souhaitée est acquise, ils sont à nouveau abaissés, de sorte que le vitrage est repris par la forme annulaire et est transféré à l'aide de celle-ci vers le poste suivant, par exemple, vers le poste de refroidissement secondaire. Selon la revendication 2 les organes de support, de même que leur dispositif d'actionnement et l'anneau de bombage, sont montés sur un cadre mobile. Dans ce cas, le vitrage peut rester sur les doigts de support lors de son évacuation vers le poste suivant.

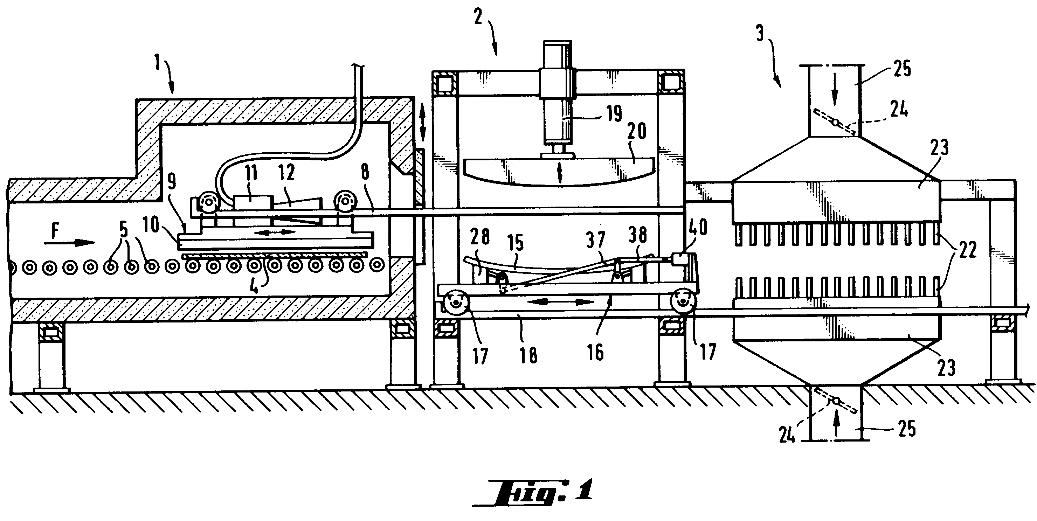

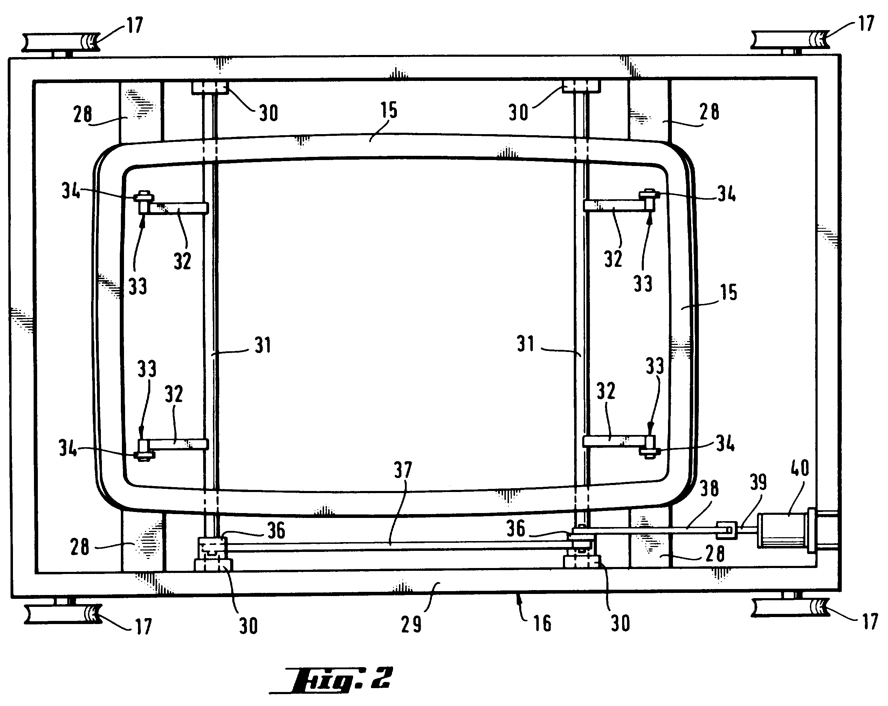

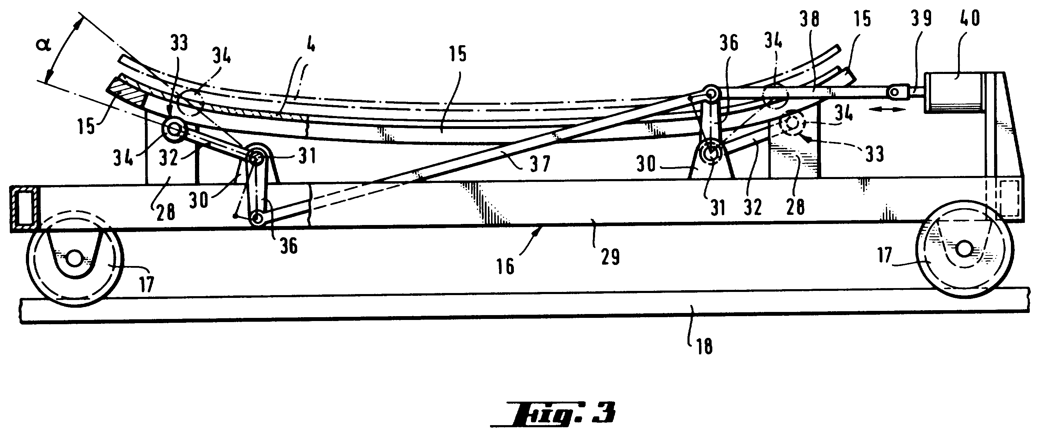

D'autres détails et caractéristiques avantageuses de l'invention ressortent de la description suivante d'un exemple de réalisation préférée, faite en référence aux dessins annexés qui représentent :
. **figure 1** : une vue d'ensemble, en partie en coupe, d'une installation convenant pour l'exécution du procédé conforme à l'invention,
. **figure 2** : une vue en plan d'un chariot mobile comprenant un anneau de bombage et des organes de support mobiles,
. **figure 3** : une vue en élévation de côté du chariot représenté sur la figure 2.

L'installation représentée schématiquement figure 1 comprend un four continu 1 pour chauffer les vitrages à la température de bombage, un poste de bombage 2 attenant au four 1 et un poste de trempe 3 qui suit le poste de bombage 2. Dans le four 1, le vitrage 4 est convoyé au moyen de rouleaux moteurs 5, dans le sens de la flèche F, en direction d'un poste de transfert situé à l'extrémité du four continu et où est installé un dispositif 9 mobile sur des rails 8. Ce dispositif de transfert 9 est essentiellement constitué par un plateau aspirant 10 dans lequel est créée, à l'aide d'un ventilateur 11 approprié et d'un tube de venturi 12, la dépression nécessaire pour soulever le vitrage 4 des rouleaux 5, le vitrage aspiré est transféré dans le poste de bombage 2.

Le vitrage 4 est alors déposé sur un anneau de bombage 15 monté sur un chariot mobile 16 comportant des roues 17 au moyen desquelles il peut être déplacé sur des rails 18 entre le poste de bombage 2 et le poste de trempe 3. Dès que le vitrage 4 est posé sur l'anneau de bombage 15, le dispositif de transfert revient dans sa position de départ. Ensuite, à l'aide du vérin à fluide sous pression 19, la forme supérieure de bombage à surface pleine 20 est abaissé et, avec son aide, le vitrage 4 est pressé contre l'anneau de bombage 15. Immédiatement après cette opération de pressage, la forme supérieure de bombage 20 est ramenée dans sa position de départ supérieure. Les registres 24 dans les conduits d'alimentation 25 des caissons de soufflage 23 sont alors ouverts et le chariot 16 pénètre, avec le vitrage posé sur l'anneau de bombage 15, dans le poste de trempe 3 où il est traité par l'air de refroidissement soufflé par les buses de soufflage 22.

Dans le cas d'un vitrage de 4 mm d'épaisseur, après 1 seconde de soufflage de trempe, les couches superficielles du vitrage sont refroidies au point qu'elles peuvent être soulevées par des organes de support en forme de doigts, sans qu'elles ne soient déformées par leur propre poids. Le vitrage peut alors être soulevé d'environ 1 à 2 cm par des organes de support montés mobiles à l'intérieur de l'anneau de bombage 15, tandis que l'opération de soufflage est poursuivie sans interruption jusqu'à ce que la trempe de l'ensemble de soufflage soit achevée. Au terme de l'opération de soufflage, le chariot 16 pénètre dans un poste d'évacuation, ici non représenté, dans lequel le vitrage bombé et trempé est déchargé sur un convoyeur de refroidissement secondaire.

Comme mentionné plus haut, l'instant auquel le vitrage est soulevé par les organes de support doit être déterminé empiriquement dans chaque cas, en fonction de l'épaisseur du vitrage et des conditions de soufflage. Dans le cas de l'exemple de réalisation ici illustré, on a utilisé des caissons de soufflage comportant des busettes qui présentent un diamètre intérieur de 8 mm, un espacement mutuel de 150 mm et une longueur de 100 mm, les données suivantes servent de valeurs indicatives :

| EPAISSEUR (mm) | PRESSION D'AIR (Pa) | TEMPS (s) |
|---|---|---|
| 3 | 21 000 | 0,5 |
| 4 | 14 000 | 1,0 |
| 5 | 9 000 | 2,0 |
| 6 | 5 000 | 3,0 |

Les figures 2 et 3 illustrent un dispositif conforme à l'invention. La forme inférieure de bombage 15 a la forme d'un anneau fermé présentant une surface de bombage continue et pourvue d'un revêtement en une matière élastique résistant aux températures élevées, par exemple fait d'un tissu de fibres de verre ou d'une matière feutrée faite de fibres très fines en un métal résistant aux températures élevées. A cet effet, on peut par exemple utiliser des revêtements du type feutre de fibres métalliques d'environ 1 mm d'épaisseur, les fibres étant faites d'un alliage de nickel-chrome et présentant un diamètre d'environ 5 à 20 m.

L'anneau de bombage 15 est monté fixé par des supports 28 sur le cadre 29. Sur le cadre 29 sont également fixées des chapes de tourillonnement 31, dans lesquelles tourillonnent des arbres 31. Sur les arbres 31 qui s'étendent en dessous de l'anneau de bombage 15 sont soudées, dans la zone située à l'intérieur de l'anneau de bombage 15, des barrettes 32 qui, à leurs extrémités, portent des organes de support 33 qui peuvent être constitués, par exemple, de segments de barres rondes qui sont chacun entourés d'un anneau 34 en matière fibreuse élastique. Dans leur position d'extrémité inférieure, les organes de support 33 sont situés à une distance d'environ 0,5 à 1 cm en dessous de la surface inférieure du vitrage posé sur le moule de bombage en forme de cadre 15.

Des bras de manivelle 36 sont en outre soudés aux arbres 31 et les deux bras de manivelle 36 sont accouplés, en vue de leur mouvement, par la barre d'accouplement 37. A un des bras de manivelle 36 est articulée une bielle 38 qui est elle-même reliée à la tige de piston 39 d'un vérin à fluide sous pression 40.

A l'aide du vérin à fluide sous pression 40, les deux arbres 31 sont, de cette façon, tournés ensemble, en sens opposés d'un angle alpha pour soulever le vitrage du cadre de bombage 15 de la distance souhaitée, par exemple d'environ 2 cm.

## Revendications

1. Procédé de bombage-trempe selon lequel les feuilles de verre sont échauffées à la température de bombage dans un four horizontal (1) puis sont bombées à la forme souhaitée par pressage entre une forme de bombage supérieure pleine (20) et une forme inférieure annulaire (15) présentant une surface de bombage continue qui sert également d'organe de transfert vers le poste de trempe (3) et d'organe de support de la feuille bombée dans le poste de trempe (3) durant une première phase de trempe qui se prolonge jusqu'au raidissement de la feuille de verre, ladite feuille étant maintenue espacée de la forme inférieure bombée (15) durant une seconde phase de trempe, **caractérisé en ce que** dans le poste de trempe (3), le vitrage est soulevé par des moyens (33) agissant localement, **et en ce que** lesdits moyens (33) supportent la feuille de verre bombée durant toute la seconde phase de trempe.

2. Dispositif de bombage comportant un four continu (1) à rouleaux, un poste de bombage (2) , un poste de soufflage (3), un chariot mobile (16) portant un anneau de bombage inférieur annulaire (15) et un dispositif de transfert (9) pour transférer le vitrage chauffé des rouleaux transporteurs (5) du four continu (1) sur l'anneau de bombage (15), **caractérisé en ce que** des organes de support (33), mobiles dans le sens vertical et agissant localement, sont montés sur le chariot mobile (16) portant l'anneau de bombage (15), ces organes de support pouvant être déplacés d'une position située en-dessous du vitrage bombé posé sur l'anneau de bombage (15) vers une position située au-dessus de la surface définie par l'anneau de bombage (15).

3. Dispositif suivant la revendication 2, **caractérisé en ce que** les organes de support (33) sont fixés sur des arbres (31) montés en rotation, et que, sur les arbres (31), sont fixés des bras de manivelle (36) par lesquels les deux arbres (31) peuvent être tournés de l'angle de rotation (alpha) par l'intermédiaire d'un vérin à fluide sous pression (40), d'une bielle (38) et d'une barre d'accouplement (37).

4. Dispositif suivant l'une des revendications 2 ou 3, **caractérisé en ce que** les organes de support (33) sont pourvus d'une garniture (34) en une matière fibreuse résistant aux températures élevées et élastiquement flexible.

5. Utilisation pour la mise en oeuvre du procédé selon la revendication 1, d'un dispositif de bombage-trempe comportant un four continu à rouleaux, un poste de bombage, un poste de soufflage dans lequel sont disposés des organes soulevables et abaissables pour élever puis supporter une feuille de verre bombée, un chariot mobile portant une forme de bombage inférieur annulaire et un dispositif de transfert pour transférer le vitrage chauffé des rouleaux du four continu sur l'anneau de bombage.

## Patentansprüche

1. Verfahren zum Biegen und Vorspannen von Glasscheiben, bei dem die Glasscheiben in einem Horizontalofen (1) auf Biegetemperatur erwärmt und anschließend durch Pressen zwischen einer oberen vollflächigen Biegeform (20) und einer unteren ringförmigen Biegeform (15) mit kontinuierlicher Biegefläche gebogen werden, wobei die ringförmige Biegeform auch als Transportorgan zur Vorspannstation (3) und als Tragorgan für die gebogene Glasscheibe in der Vorspannstation während einer ersten Vorspannphase dient, die sich bis Verfestigung der Glasscheibe fortsetzt, und die Glasscheibe während einer zweiten Vorspannphase im Abstand von der unteren Biegeform (15) gehalten wird, **dadurch gekennzeichnet**, daß die Glasscheibe in der Vorspannstation (3) durch lokale einwirkende Mittel (33) angehoben wird, und daß diese Mittel (33) die gebogene Glasscheibe während der gesamten zweiten Vorspannphase tragen.

2. Vorrichtung zum Biegen von Glasscheiben, mit einem Durchlauf-Rollofen (1), einer Biegestation (2), einer Abblasstation (3), einem verfahrbaren Wagen (16) mit einem unteren rahmenförmigen Biegering (15) und einer Übergabevorrichtung (9) zum Übergeben der erhitzten Glasscheibe von den Transportrollen (5) des Durchlaufofens (1) auf den Biegering (15), **dadurch gekennzeichnet**, daß in vertikaler Richtung bewegliche und lokal einwirkende Tragorgane (33) auf dem verfahrbaren, den Biegering (15) tragenden Wagen angeordnet sind, wobei diese Tragorgane von einer unterhalb der auf dem Biegering (15) liegenden gebogenen Glasscheibe gelegenen Position in eine Position oberhalb der durch den Biegering (15) bestimmten Fläche bewegbar sind.

3. Vorrichtung nach Anspruch 2, dadurch gekennzeichnet, daß die Tragorgane (33) an drehbar gelagerten Wellen (31) angeordnet sind, und daß an den Wellen (31) Kurbelarme (36) befestigt sind, durch die über einen Druckzylinder (40), eine Schubstange (38) und eine Koppelstange (37) die beiden Wellen (31) um einen Drehwinkel (Alpha) drehbar sind.

4. Vorrichtung nach Anspruch 2 oder 3, dadurch gekennzeichnet, daß die Tragorgane (33) mit einer Auflage (34) aus einem hitzebeständigen und elastische nachgiebigen Fasermaterial versehen sind.

5. Anwendung einer Biege- und Vorspannanlage mit einem Rollen-Durchlaufofen, einer Biegestation und einer Abblasstation für die Durchführung des Verfahrens nach Anspruch 1, wobei in der Abblasstation heb- und senkbare Organe zum Anheben und anschließenden Tragen einer gebogenen Glasscheibe angeordnet und ein verfahrbarer, eine untere ringförmige Biegeform tragender Wagen sowie eine Übergabevorrichtung zum Übergeben der heißen Glasscheibe von den Transportrollen des Durchlaufofens auf den Biegering vorgesehen sind.

## Claims

1. Bending-toughening process, according to which the glass sheets are heated to the bending temperature in a horizontal furnace (1), then are bent to the desired shape by pressing between an upper, solid bending mould (20) and a lower, annular mould (15) having a continuous bending surface, which serves also as transfer member to the toughening station (3) and as support member for the bent glass sheet in the toughening station (3) during a first phase of toughening, which continues until the glass sheet has become rigid, said sheet being kept spaced away from the lower curved mould (15) during a second toughening phase, characterized in that, in the toughening station (3), the pane is raised by means (33) acting locally, and in that said means (33) support the bent glass sheet during the entire second toughening phase.

2. Bending device comprising a straight-through furnace (1) with rollers, a bending station (2), a blowing station (3), a movable carriage (16) carrying a lower, annular bending ring (15) and a transfer device (9) for transferring the heated pane from the conveying rollers (5) of the straight-through furnace (1) onto the bending ring (15), characterized in that support members (33), movable in the vertical direction and acting locally, are mounted on the movable carriage (16) carrying the bending ring (15), these support members being able to be displaced from a position situated below the bent pane resting on the bending ring (15) to a position situated above the surface defined by the bending ring (15).

3. Device according to Claim 2, characterized in that the support members (33) are fixed to rotatably mounted shafts (31) and that crank arms (36) are fixed to the shafts (31), by which crank arms the two shafts (31) can be rotated through the angle of rotation (alpha) by means of a pressurized fluid jack (40), a connecting rod (38) and a coupling bar (37).

4. Device according to one of Claims 2 or 3, characterized in that the support members (33) are provided with a facing (34) of a high-temperature resistant and elastically flexible fibrous material.

5. Use, for carrying out the process according to Claim 1, of a bending-toughening device comprising a straight-through furnace with rollers, a bending station, a blowing station, in which are disposed members that can be raised and lowered for raising and then supporting a bent glass sheet, a movable carriage carrying a lower, annular bending mould and a transfer device for transferring the heated pane from the rollers of the straight-through furnace onto the bending ring.
